(19) Europäisches Patentamt
European Patent Office
Office européen des brevets

(11) Veröffentlichungsnummer: **0 247 430 B1**

(12) # EUROPÄISCHE PATENTSCHRIFT

(45) Veröffentlichungstag der Patentschrift: **23.10.91**

(51) Int. Cl.$^5$: **C08L 83/10**, C08K 5/49, //(C08L83/10,25:02,27:18,51:04)

(21) Anmeldenummer: **87106844.1**

(22) Anmeldetag: **12.05.87**

(54) **Flammwidrige, thermoplastische Formmassen.**

(30) Priorität: **24.05.86 DE 3617511**

(43) Veröffentlichungstag der Anmeldung:
**02.12.87 Patentblatt 87/49**

(45) Bekanntmachung des Hinweises auf die Patenterteilung:
**23.10.91 Patentblatt 91/43**

(84) Benannte Vertragsstaaten:
**DE FR GB IT NL**

(56) Entgegenhaltungen:
**EP-A- 0 122 535**
**EP-A- 0 193 121**
**EP-A- 0 206 058**
**EP-A- 0 224 805**
**EP-A- 0 245 683**

(73) Patentinhaber: **BAYER AG**
**W-5090 Leverkusen 1 Bayerwerk(DE)**

(72) Erfinder: **Kress, Hans-Jürgen, Dr.**
**Scheiblerstrasse 111**
**W-4150 Krefeld 1(DE)**
Erfinder: **Lindner, Christian, Dr.**
**Riehlerstrasse 200**
**W-5000 Köln 60(DE)**
Erfinder: **Müller, Friedemann, Dr.**
**Am Steinacker 5**
**W-4040 Neuss 21(DE)**
Erfinder: **Paul, Winfried, Dr.**
**Bethelstrasse 22**
**W-4150 Krefeld 1(DE)**
Erfinder: **Peters, Horst,Dr.**
**Winterberg 25**
**W-5090 Leverkusen 3(DE)**
Erfinder: **Buekers, Josef**
**Kneinstrasse 58a**
**W-4150 Krefeld 1(DE)**

EP 0 247 430 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der deutschen Patentanmeldung DE-A-35 21 388.4 sind flammwidrige thermoplastiche Formmassen enthaltend:

A.) 50-90 Gew.-Teilen eines thermoplastischen aromatischen Polycarbonats,

B.) 10-50 Gew.-Teilen eines halogenfreien statistisch aufgebauten Copolymerisats aus

1. 95-70 Gew.-%, vorzugsweise 90-75 Gew.-% Styrol, $\alpha$-Methylstyrol oder kernalkylierten Styrolen oder Mischungen der genannten Vinylaromaten und
2. 5-30 Gew.-%, vorzugsweise 10-25 Gew.-% Maleinsäureanhydrid,

C.) 0-15 Gew.-Teile einer niedermolekularen oder hochmolekularen Halogenverbindung, insbesondere einer Bromverbindung, bezogen auf jeweils 100 Gew.-Teile aus A. + B. und C., wobei jeweils der Halogengehalt resultierend aus den Komponenten A. + C., zwischen 3 und 10 Gew.-%, bezogen auf das Gesamtgewicht der Komponenten A. und C., betragen soll, die dadurch gekennzeichnet sind, daß sie zusätzlich

D.) 1-20 Gew.-Teilen, vorzugsweise 2-15 Gew.-Teilen, bezogen auf 100 Teile Gesamtgewicht aus A. + B. und gegebenenfalls C. einer Phosphorverbindung der Formel (1)

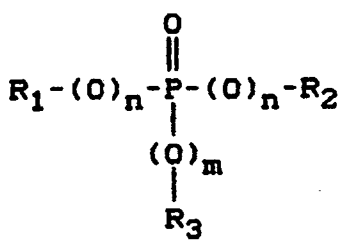

(I)

worin

$R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl sind und

n und m unabhängig voneinander für 0 oder 1 stehen und

E. 0,05-2,0 Gew.-Teile, insbesondere 0,1-1,0 Gew.-Teile, bezogen auf 100 Gew.-Teile A. + B. und gegebenenfalls C., eines Tetrafluorethylenpolymerisats mit mittleren Teilchengrößen von 0,05-20 $\mu$m und einer Dichte von 1,2 - 1,9 g/cm$^3$ enthalten,

wobei die Komponente E. in Form einer koagulierten Mischung von Emulsionen der Tetrafluorethylenpolymerisate E. mit Emulsionen von Pfropfpolymerisaten F. aus

- F.1 5-90 Gew.-Teilen, vorzugsweise 30-80 Gew.-Teilen einer Mischung aus:
- F.1.1 50-95 Gew.-% Stryol, $\alpha$-Methylstyrol, kernsubstituiertem Stryol, Methylmethacrylat oder Mischungen daraus, und
- F.1.2 50-5 Gew.-% (Meth)Acrylnitril, Methylmethacrylat, Maleinsäureanhydrid, N-substituiertem Maleinimid oder Mischungen daraus, auf
- F.2. 95-10 Gew.-Teile , vorzugsweise 70-20 Gew.-Teile eines Kautschuks mit einer Glastemperatur $T_G \leq 10^\circ$ C,

eingesetzt wird,

das Gewichtsverhältnis Pfropfpolymerisat F. zum Tetrafluorethylenpolymerisat E. zwischen 95:5 und 60:40 liegt und der Gehalt an F., bezogen auf 100 Gew.-Teile A. + B. und gegebenenfalls C., zwischen 0,1 und 3,0 Gew.-Teilen liegt,

sowie gegebenenfalls wirksame Mengen an Stabilisatoren, Pigmenten, Fließmitteln, Entformungsmitteln und/oder Antistatika.

Gemäß dieser deutschen Patentanmeldung geeignete, thermoplastische, aromatische Polycarbonate gemäß Komponente A. sind solche auf Basis der Diphenole der Formel (II)

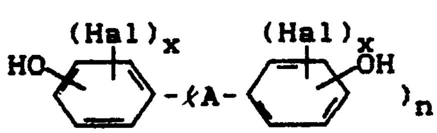

(II)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Hal, Chlor oder Brom,

x 0, 1 oder 2 und

"n" 1 oder 0 sind.

Gemäß dieser deutschen Patentanmeldung geeignete Polycarbonate gemäß Komponente A. sind sowohl Homopolycarbonate als auch Copolycarbonate der Diphenole (II).

In Weiterentwicklung der halogenfreien Formmassen der deutschen Patentanmeldung DE-A-35 21 388.4 konnte nun gefunden werden, daß diese Formmassen bezüglich ihrer Zähigkeit, insbesondere Kerbschlagzähigkeit noch verbessert werden können, wenn die Polycarbonatkomponente A. aus Polydiorganosiloxan-Polycarbonat-Blockcopolymeren besteht oder diese enthält.

Gegenstand der vorliegenden Erfindung sind daher thermoplastische Formmassen, enthaltend

A. 50 bis 90 Gew.-Teile eines halogenfreien Polydiorganosiloxan-Polycarbonat-Blockcopolymers, mit mittlerem Molekulargewicht $\overline{M}_w$ von 10.000 bis 200.000 und mit einem Gehalt an aromatischen Carbonatstruktureinheiten zwischen 75 Gew.-% und 99,0 Gew.-%, vorzugsweise zwischen 75 Gew.-% und 97,5 Gew.-%, und einem Gehalt an Diorganosiloxy-Einheiten zwischen 25 Gew.-% und 1,0 Gew.-%, vorzugsweise zwischen 25 Gew.-% und 2,5 Gew.-%, wobei die Blockcopolymeren, ausgehend von $\alpha,\omega$-Bishydroxyaryloxyendgruppen-haltigen Polydiorganosiloxanen, mit einem Polymerisationsgrad $P_n$ von 5 bis 100, vorzugsweise von 20 bis 80 hergestellt werden,

B. 10 bis 50 Gew.-Teile eines halogenfreien statistisch aufgebauten Copolymerisats aus 95 bis 50 Gew.-%, vorzugsweise 90 bis 75 Gew.-% Styrol, $\alpha$-Methylstyrol oder kernalkylierten Styrolen oder Mischungen der genannten Vinylaromaten mit 5 bis 30 Gew.-%, vorzugsweise 10 bis 25 Gew.-% Maleinsäureanhydrid,

C. 1 bis 20 Gew.-Teile, vorzugsweise 2 bis 15 Gew.-Teile, bezogen auf 100 Gew.-Teile Gesamtgewicht aus A. und B., einer halogenfreien Phosphorverbindung der Formel (I),

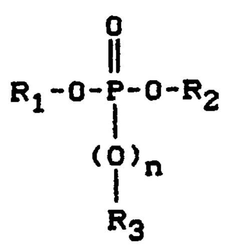

(I)

worin

$R_1$, $R_2$ und $R_3$ unabhängig voneinander $C_1$-$C_8$-Alkyl oder gegenbenenfalls alkylsubstituiertes $C_6$-$C_{20}$-Aryl sind und n für 0 oder 1 steht und

D. 0,05 bis 2,0 Gew.-Teile, insbesondere 0,1 bis 1,0 Gew.-Teile, bezogen wiederum auf 100 Gew.-Teile Gesamtgewicht aus A. und B., eines Tetrafluorethylenpolymerisats mit mittleren Teilchengrößen von 0,05 bis 20 $\mu$m und einer Dichte von 1,2 bis 1,9 g/cm$^3$,

wobei die Komponente D in Form einer koagulierten Mischung von Emulsionen der Tetrafluorethylenpolymerisate D mit Emulsionen von max. 4 Gew.-Teilen, mindestens jedoch 0,1 Gew.-Teilen, bezogen auf 100 Gew.-Teile der Summe der Komponenten A. + B., an halogenfreien Pfropfpolymerisaten E. aus

E.1 5 bis 90 Gew.-Teilen, vorzugsweise 30 bis 80 Gew.-Teilen, einer mischung aus:

E1.1 50 bis 95 Gew.-% Styrol, $\alpha$-Methylstyrol, kernsubstituiertem Stryol, oder Mischungen daraus und

E1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile, vorzugsweise 70 bis 20 Gew.-Teile, eines Kautschuks, mit einer Glastemperatur $T_G \leq 10\,^\circ C$,

eingesetzt wird, und wobei das Gewichtsverhältnis Pfropfpolymerisat E. zum Tetrafluorethylenpolymerisat D. zwischen 95:5 und 60:40 liegt, sowie gegebenenfalls wirksame Mengen an Stabilisatoren, Pigmenten, Fließmitteln, Entformungsmitteln und/oder Antistatika.

Die Komponente A. kann auch eine Mischung von halogenfreien Polydiorganosiloxan-Polycarbonat-Blockcoplymeren mit anderen polysiloxanfreien, thermoplastischen, halogenfreien Polycarbonaten sein,

wobei der Gesamtgehalt an Diorganosiloxy-Einheiten in dieser Mischung wiederum zwischen 1 Gew.-% und 25 Gew.-%, vorzugsweise zwischen 2,5 Gew.-% und 25 Gew.-% liegt.

Aus der DE-OS 33 22 260 sind flammwidrige thermoplastische Formmassen bekannt, die (a) aromatische Polycarbonate, (b) SAN-Pfropfpolymerisate, (c) thermoplastische Polymerisate bevorzugt u.a. Styrol-Maleinsäureanhydrid-Copolymerisate, (d) gegenbenfalls Halogenverbindungen (e) Antimontrioxid, Antimoncarbonat, Wismuttrioxid oder Wismutcarbonat und (f) feinteiliges Tetrafluorethylenpolymerisat enthalten, wobei dieses über eine wäßrige Emulsion der SAN-Pfropfpolymerisate (b) und gegebenenfalls eine wäßrige Emulsion des thermoplastischen Polymerisats (c) in die Formmasse eingebracht wird, wodurch gute Oberflächen der Formmassen erzielt werden. Gemäß Seite 16 dieser DE-OS läßt sich dieses Prinzip der Einarbeitung von Tetrafluorethylenpolymerisaten auf alle Polycarbonat-haltigen Formmassen übertragen.

Aus der EP-OS 0 174 493 sind thermoplastische, flammwidrige Formmassen bekannt, die aus thermoplastischen Polycarbonaten, Pfropfpolymerisaten, Copolymerisaten, Phosph(on)atestern, Tetrafluorethylenpolymerisaten und gegebenenfalls Halogenverbindungen bestehen. Als Polycarbonate können auch Polydiorganosiloxan-Polycarbonat-Blockcopolymere eingesetzt werden.

Bevorzugte Copolymerisate sind beispielsweise solche aus Stryol und Maleinsäureanhydrid. Derartige Formmassen besitzen jedoch, wie oben erwähnt, insbesondere bei großen Mengen auf den Kautschuk-Anteil zurückzuführende Nachteile, wie eine geringe Temperaturbelastbarkeit bzw. mit der Zeit nachlassende Duktilität, die durch eine Kautschukalternung hervorgerufen wird, wobei es auch zu deutlichen Vergilbungen oder Verbräunungen kommen kann. Es hat sich nun gezeigt, daß auch schon durch ausschließliche Verwendung von Polydiorganosiloxan-Polycarbonat-Blockcopolymeren und Styrol-Maleinsäureanhydrid-Copolymeren ohne Kautschuk bzw. Pfropfpolymerisat Produkte mit sehr hoher Kerbschlagzähigkeit erreicht werden können.

Erfindungsgemäß geeignete halogenfreie Polydiorganosiloxan-Polycarbonat-Blockcopolymere gemäß Komponente A. sind solche auf Basis der halogenfreien Diphenole der Formel (II) mit x = 0 und der Formel (IIa)

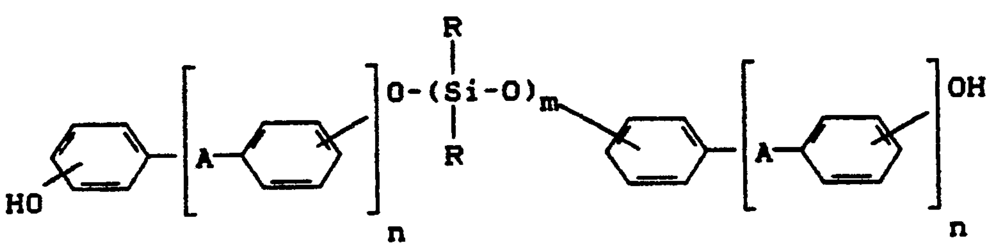

(IIa)

worin

-A- die für Formel (II) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist, und wobei der Gewichtsanteil an Diphenolen der Formel (IIa) in den Copolycarbonaten jeweils so bemessen ist, daß der Gehalt an Diorganosiloxy-Einheiten

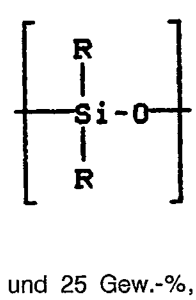

im Copolycarbonat A. zwischen 1 Gew.-% und 25 Gew.-%, vorzugsweise zwischen 2,5 Gew.-% und 25 Gew.-% beträgt.

Andere, siloxanfreie, thermoplastische, halogenfreie Polycarbonate sind vorzugsweise solche, die als halogenfreie Diphenole nur solche der Formel II mit x = 0 eingebaut enthalten.

In den Fällen, in denen die Komponente A. ein Gemisch aus siloxanhaltigen Polycarbonaten und siloxanfreien Polycarbonaten ist, können die siloxanhaltigen Polycarbonate auch einen Gehalt an Diorganosiloxyeinheiten von mehr als 25 Gew.-% enthalten, sofern durch die Abmischung mit den siloxanfreien

Polycarbonaten der Gehalt im Polycarbonatgemisch wiederum zwischen 1 Gew.-% und 25 Gew.-% liegt.

Die halogenfreien Diphenole der Formel (II) sind entweder literaturbekannt oder nach literaturbekannten Verfahren herstellbar; Polydiorganosiloxane mit Hydroxy-aryloxy-Endgruppen gemäß Formel (IIa) sind ebenfalls bekannt (s. beispielsweise US-Patent 3 419 634) bzw. nach literaturbekannten Verfahren herstellbar.

Die Herstellung der erfindungsgemäß geeigneten Polycarbonate gemäß Komponente A. ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. [Bezüglich Polydiorganosiloxanhaltigen Polycarbonaten siehe beispielsweise DE-OS 3 334 782.

Geeignete Kettenabbrecher sind beispielsweise Phenol oder p-tert.-Butylphenol, aber auch langkettige Alkylphenole wie 4-(1-3 Tetramethyl-butyl)phenol gemäß DE-OS 2 842 005 oder Monoalkylphenole oder Dialkylphenole mit insgesamt 8 bis 20 C-Atomen in den Alkylsubstituenten gemäß deutscher Patentanmeldung DE-A-3506472.2, wie beispielsweise p-Nonylphenol, 2,5-di-tert. Butylphenol, p.-tert. Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und (IIa).

Die erfindungsgemäß geeigneten Polycarbonate gemäß Komponente A haben mittlere Gewichtsmittelmolekulargewichte ($\overline{M}_w$, gemessen beispielsweise durch Ultrazentrifugation oder Streulichtmessung) von 10.000 bis 200.000, vorzugsweise von 20.000 bis 80.000.

Geeignete halogenfreie Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan und 1,1-Bis-(4-hydroxyphenyl)-cyclohexan.

Bevorzugte halogenfreie Diphenole der Formel (II) sind 2,2-Bis-(4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl und Phenyl ist.

Bevorzugte Diphenole der Formel (IIa) sind die der Formel (IIb)

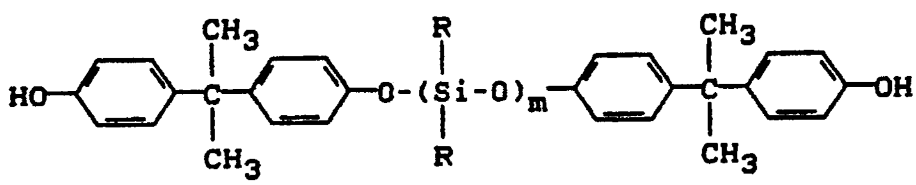

(IIb)

worin

die R's gleich sind und die vorstehend genannte Bedeutung haben, also Methyl etc. und Phenyl bedeuten und m wiederum eine ganze Zahl zwischen 5 und 100, vorzugsweise zwischen 20 und 80 ist.

Die Herstellung der Diphenole der Formel (IIa) kann beispielsweise aus den entsprechenden Bis-chlorverbindungen (III)

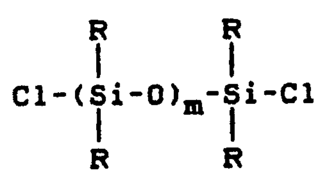

(III)

und den Diphenolen (II) beispielsweise gemäß US-Patent 3 419 634, Spalte 3 in Kombination mit US-Patent 3 182 662 erfolgen.

In den Bis-chlorverbindungen (III) haben R und m die Bedeutung wie in den Diphenolen (IIa) beziehungsweise (IIb).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei-oder mehr als dreifunktionellen Verbindungen, beispielsweise solchen

mit drei oder mehr als drei phenolischen OH-Gruppen.

Bevorzugte Polydiorganosiloxan-Polycarbonat-Blockcopolymere sind Copolycarbonate der halogenfreien Diphenole der Formel (II) mit Diphenolen der Formel (IIb).

Die erfindungsgemäß geeigneten Styrol-Maleinsäureanhydrid-Copolymeren gemäß Komponente B. sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Die Anteile der beiden Komponenten der erfindungsgemäß geeigneten statistisch aufgebauten Styrol-Maleinsäureanhydrid-Copyolymeren können innerhalb weiter Grenzen variiert werden. Der bevorzugte Gehalt an Maleinsäureanhydrid liegt zwischen 10 und 25 Gew.-%.

Anstelle von Styrol können die Polymeren auch kernsubstituierte Styrole wie p-Methylstyrol, Vinyltoluol, 2,4-Dimethylstyrol und andere substituierte Styrole wie α-Methylstyrol erhalten.

Die Molekulargewichte (Zahlenmittel $\overline{M}n$) der erfindungsgemäß geeigneten statistisch aufgebauten Styrol-Maleinsäureanhydrid-Copolymeren gemäß Komponente B. können über einen weiten Bereich variieren. Bevorzugt ist der Bereich von 60.000 bis 200.000. Bevorzugt ist für diese Produkte eine Grenzviskositätszahl [η] von 0,3 - 0,9 (gemessen in Dimethylformamid bei 25 °C; siehe hierzu Hoffmann, Krömer, Kuhn, Polymeranalytik I, Stuttgart 1977, Seite 316 ff.).

Die erfindungsgemäß geeigneten halogenfreien Phosphorverbindungen gemäß Komponente C. sind generell bekannt (siehe beispielsweise Ullmann, Enzyklopädie der technischen Chemie, Bd. 18, S. 301 ff., 1979; Houben-Weyl, Methoden der Organischen Chemie, Bd. 12/1, S. 43; Beilstein, Bd. 6, S. 177).

Erfindungsgemäß geeignete Phosphorverbindungen gemäß Komponente C., Formel (I), sind beispielsweise Triphenylphosphat, Trikresylphosphat, Diphenyl-2-ethylkresylphosphat, Tri-(iso-propylphenyl)-phosphat, Methylphosphonsäurediphenylester oder Phenylphosphonsäurediethylester.

Die erfindungsgemäß geeigneten Tetrafluorethylenpolymerisate gemäß Komponente D. sind Polymere mit Fluorgehalten von 65 bis 76 Gew.-%, vorzugsweise 70 bis 76 Gew.-%. Beispiele sind Polytetrafluorethylen, Tetrafluorenthylen-Hexafluorpropylen-Copolymere oder Tetrafluorethylen-Copolymerisate mit geringen Mengen fluorfreier, copolymerisierbarer, ethylenisch ungesättigter Monomerer.

Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7 bis 71 kg/cm³ und bei Temperaturen von 0 bis 200 °C, vorzugsweise bei Temperaturen von 20 bis 100 °C (US-Patent 2 393 967).

Die Teilchengröße der erfindungsgemäßen Tetrafluorethylenpolymerisate liegt im Bereich von 0,05 bis 20 µm und die Dichte im Bereich von 1,2 bis 1,9 g/cm³.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A. bis C. sowie einem Polytetrafluorethylen-Pulver her, das eine Teilchengröße und Dichte besitzt, die größer als der erfindungsgemäße Bereich sind, so werden zwar Formmassen hoher Flammwidrigkeit erhalten, Formkörper daraus haben aber manchmal insbesondere bei komplizierten Spritzgußteilen und bei hoher Temperaturbelastung eine mangelhafte Oberfläche, beispielsweise Mikrorisse oder Schlieren, und sie besitzen für manche Anforderungsprofile eine nicht voll ausreichende Zähigkeit.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate D. mit Emulsionen der Pfropfpolymerisate E. eingesetzt werden.

Zur Herstellung einer entsprechenden Mischung wird zuerst eine wäßrige Emulsion (Latex) eines Pfropfpolymerisates E. mit mittleren Latexteilchengrößen von 0,1 bis 2 µm, insbesondere 0,2 bis 0,6 µm, mit einer feinteiligen Emulsion eines Tetrafluorethylenpolymerisates in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate E. besitzen Feststoffgehalte von 25 bis 60 Gew.-%, insbesondere von 30 bis 45 Gew.-%.

In der Emulsionsmischung liegt das Gewichtsverhältnis Pfropfpolymerisat E. zum Tetrafluorethylenpolymerisat D. zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln wie Alkoholen, Ketonen, vorzugsweise bei Temperaturen von 20 bis 150 °C. Falls erforderlich,

kann bei 50 bis 200 ° C, bevorzugt 70 bis 100 ° C, getrocknet werden.

Geeignete Tetrafluorethylenpolymerisat-Emulsionen sind handelsübliche Produkte und werden beispielsweise von der Firma DuPont als Teflon® 30 N angeboten.

Zur Herstellung der halogenfreien Pfropfpolymerisate gemäß Komponente E. geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacralat, Methylacrylat oder Ethylmethacrylat). Ein weiterer geeigneter Kautschuk ist beispielsweise Polyisopren. Geeignet sind weiterhin Alkylacrylatkautschuke auf der Basis von $C_1$-$C_8$-Alkylacrylaten, insbesondere Ethyl-, Butyl-, Ethylhexylacrylat.

Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkende ethylenisch ungesättigte Monomere enthalten. Solche Vernetzer sind z.B. Alkylendioldi(meth)-acrylate, Polyesterdi(meth)-acrylate, Divinylbenzol, Tri-Vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien oder ein Copolymerisat eines konjugierten Diens, mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem konjugierten Dienmonomer.

Bevorzugte Kautschuke zur Herstellung der Pfropfpolymerisate E. sind Dien- und Alkylacrylatkautschuke.

Die Kautschuke liegen in den Pfropfpolymerisaten E. in Form wenigstens partiell vernetzter Teilchen einer mittleren Teilchengröße von 0,1 bis 2,0 µm, insbesondere 0,2 bis 0,6 µm, vor.

Die Pfropfpolymerisate E. werden durch radikalische Pfropfpolymerisation der eingangs definierten Monomerengemische aus E.1.1 und E.1.2 in Gegenwart der zu pfropfenden Kautschuke E.2 hergestellt und sind durchweg bekannt. Bevorzugte Herstellungsverfahren für die Pfropfpolymerisate E. sind Emulsions-, Lösungs-, Masse- oder Suspensionspolymerisation. Besonders bevorzugte Pfropfpolymerisate E. sind die sogenannten ABS-Polymerisate. Als kernsubstituiertes Styrol sei p-Methylstyrol erwähnt.

Da der Einsatz der erfindungsgemäß zu verwendenden Pfropfpolymerisate E. durch Vorabmischung ihrer Emulsionen mit Emulsionen der Komponente D. erfolgt, ist die Herstellung der Komponente E. nach dem Verfahren der Emulsionspolymerisation am zweckmäßigsten.

Die erfindungsgemäßen thermoplastischen Formmassen können weitere für Polycarbonate oder für die thermoplastischen Polymerisate bekannte Zusätze wie Stabilisatoren, Pigmente, Fließmittel, Entformungsmittel und/oder Antistatika enthalten.

Die erfindungsgemäßen Formmassen, bestehend aus den Komponenten A., B., C., D. und E. und gegebenenfalls weiteren bekannten Zusätzen wie Stabilisatoren, Pigmenten, Fließmitteln, Entformungsmitteln und/oder Antistatika werden hergestellt, indem man die jeweiligen Bestandteile in bekannter Weise vermischt und danach bei Temperaturen von 200 bis 330 ° C in üblichen Aggregaten wie Innenknetern oder Ein- oder Zweischneckenextrudern schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in gebräuchlichen Eindampfaggregaten, beispielsweise in Eindampfextrudern, eindampft.

Die Vermischung der einzelnen Bestandteile kann in bekannter Weise sowohl sukzessive als auch simultan erfolgen, und zwar sowohl bei etwa 20 ° C (Raumtemperatur) als auch bei höher Temperatur.

Gegenstand der vorliegenden Erfindung ist somit auch ein Verfahren zur Herstellung von thermoplastischen Formmassen bestehend aus den Komponenten A., B., C., D. und E. sowie gegebenenfalls Stabilisatoren, Pigmenten, Fließmitteln, Entformungsmitteln und/oder Antistatika, das dadurch gekennzeichnet ist, daß man die Komponenten A., B., C., D. und E. sowie gegebenenfalls Stabilisatoren, Pigmente, Fließmittel, Entformungsmittel und/oder Antistatika nach erfolgter Vermischung bei Temperaturen von 200 bis 330 ° C in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art (z. B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z u. Z. Polymere 250 (1972) 782 bis 796.

## Beispiele

Eingesetzte Legierungskomponente

A.1 Ein Copolycarbonat auf Basis von Bisphenol A und 5 Gew.-% Polydimethylsiloxan der Blocklänge ($\overline{P}_n$) 40, mit einer relativen Lösungsviskosität von 1,31, gemessen in $CH_2Cl_2$ bei 25 °C und einer Konzentration von 0,5 Gew,-%, hergestellt unter Verwendung von Phenol als Kettenabbrecher, gemäß DE-OS 3 334 782.

A.2 Homopolycarbonat auf Basis von Bisphenol A mit einer relativen Lösungsviskosität von 1,32, gemessen in $CH_2Cl_2$ bei 25 °C und einer Konzentration von 0,5 Gew,-%, hergestellt unter Verwendung von Phenol als Kettenabbrecher.

B. Styrol-Maleinsäureanhydrid-Copolymerisat mit einem Maleinsäureanhydrid-Gehalt von 14% und einem mittleren Zahlenmittelmolekulargewicht $\overline{M}n$ von 110.000, gemessen durch Gelchromatographie in $CH_2Cl_2$ bei 25 °C und eine Auswertung über eine Polystyroleichung. (Dylark 332® der Firma ARCO).

C. Triphenylphosphat

D.1 Tetrafluorethylenpolymerisat als koagulierte Mischung aus einem SAN-Pfropfpolymerisat und einer Tetrafluorethylenpolymerisat-Emulsion in Wasser; Gehalt an Tetrafluorethylenpolymerisat in der Mischung:

10% Gew.-% bezogen auf Mischung PTFE-SAN-Pfropfpolymerisat. Die Tetrafluorethylenpolymerisat-Emulsion besitzt einen Feststoffgehalt von 60 %: die Teilchengröße liegt zwischen 0,05 und 0,5 µm. Die SAN-Pfropfpolymerisat-Emulsion besitzt einen Feststoffgehalt von 34 Gew.-% und hatte eine Latexteilchengröße von 0,3 bis 0,4 µm.

Herstellung von D.1: Die Emulsion des Tetrafluorethylenpolymerisats wurde mit der Emulsion des SAN-Pfropfpolymerisat E vermischt und mit 1,8 Gew.-%, bezogen auf Polymerfeststoff, phenolischer Antioxidantien stabilisiert. Bei 85 bis 95 °C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Dieses Pulver kann dann mit den weiteren Komponenten in den beschriebenen Aggregaten compoundiert werden.

D.2 Tetrafluorethylenpolymerisat in Pulverform mit einer Teilchengröße von 500 bis 650 µm und einer Dichte von 2,18 bis 2,20 g/cm³ der Firma Hoechst (Hostaflon TF 2026).

E. SAN-Pfropfpolymerisat von 50 Gew.-% Styrol-Acrylnitril-Gemisch (im Gew.-Verhältnis von 72:78) auf 50 Gew.-% teilchenformiges Polybutadien mit einer mittleren Teilchengröße ($d_{50}$) von 0,3-0,4 µm, erhalten durch Emulsionspolymerisation.

Herstellung der erfindungsgemäßen Formmassen

Die Compoundierung der Komponenten A., B., C., D. und E. erfolgte auf einem Doppelwellenextruder (Werner und Pfleiderer) vom Typ ZSK 53 bei einer Temperatur von 230 °C.

Die Herstellung von Formkörpern erfolgte auf einer Spritzgußmaschine bei 260 °C.

Das Brandverhalten der Proben wurde nach UL-Subj. 94 V in Prüfköroperdicken von 1,6 mm bzw. 3,2 mm gemessen. Der UL-94-Test wird wie folgt durchgeführt:

Substanzproben werden zu Stäben der Abmessungen 127 × 12,7 × 3,2 mm bzw. 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 × $10^4$ kJ/m³ (1,000 BUT per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung des Testflamme brennen; sie zeigen keine Gesamtflammzeit von mehr als 50 s bei der zweimaligen Flammeinwirkung auf jeden Probensatz; sie

enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt "nicht bestanden" und ist die Klassifizierung von Proben, die eine Nachbrennzeit von 30 s aufweisen.

Die Bestimmung der Kerbschlagzähigkeit erfolgte in Ablehnung an DIN 53 453/ISO R 179 an Stäben der Abmessung 50 × 6 × 4 mm, wobei die Stäbe mit einer V-förmigen Kerbe der Kerbtiefe 2,7 mm versehen wurden.

Die Bestimmung der Wärmeformbeständigkeit nach Vicat (Methode B) erfolgte gemäß DIN 53 460.

Aus der folgenden Tabelle können die genauen Zusammensetzungen der geprüften Formmassen sowie die erhaltenen Prüfdaten entnommen werden.

**Tabelle**

| A 1 | A 2 | B (Gew.-Tl.) | C | D 1 | D 2 | Kerbschlag-zähigkeit ($kJ/m^2$) | Wärmeform-beständigkeit (°C) | UL-94 V 3,2 mm | UL-94 V 1,6 mm |
|---|---|---|---|---|---|---|---|---|---|
| erfindungsgemäße Beispiele | | | | | | | | | |
| 80 | | 20 | 10 | 3 | | 27,2 | 103 | VO | V1 |
| 70 | | 30 | 10 | 3 | | 33,5 | 100 | VO | - |
| Vergleichsbeispiele | | | | | | | | | |
| 80 | | 20 | 10 | | 0,3 | 18,1 | 101 | VO | VO |
| | 80 | 20 | 10 | 3 | | 17,9 | 112 | VO | V1 |
| 70 | | 30 | 10 | | 0,3 | 19,2 | 103 | VO | VI |

## Patentansprüche

**1.** Thermoplastische Formmassen, bestehend aus

A. 50 bis 90 Gew.-Teilen eines halogenfreien Polydiorganosiloxan-Polycarbonat-Blockcopolymeren, mit mittlerem Molekulargewicht $\overline{M}_w$ von 10.000 bis 200.000 und mit einem Gehalt an aromatischen Carbonatstruktureinheiten zwischen 75 Gew.-% und 99 Gew.-% und einem Gehalt an Diorganosiloxy-Einheiten zwischen 25 Gew.-% und 1 Gew.-% wobei die Blockcopolymeren, ausgehend von $\alpha,\omega$-Bishydroxyaryloxyendgruppenhaltigen Polydiorganosiloxanen, mit einem Polymerisationsgrad $\overline{P}_n$ von 5 bis 100 hergestellt werden,
B. 10 bis 50 Gew.-Teilen eines halogenfreien statistisch aufgebauten Copolymerisats aus 95-70 Gew.-% Styrol, $\alpha$-Methylstyrol oder kernsubstituierten Styrolen oder Mischungen der genannten Vinylaromaten mit 5 bis 30 Gew.-% Maleinsäureanhydrid,
C. 1 bis 20 Gew.-Teilen, bezogen auf 100 Gew.-Teile, Gesamtgewicht aus A. und B., einer halogenfreien Phosphorverbindung der Formel (I),

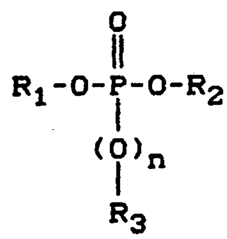

(I)

worin

$R_1$, $R_2$ und $R_3$ unabhängig voneinander $C_1$-$C_8$-Alkyl oder gegebenenfalls alkylsubstituiertes $C_6$-$C_{20}$-Aryl sind und n für 0 oder 1 steht und
D. 0,05 bis 2,0 Gew.-Teile, bezogen wiederum auf 100 Gew.-Teile Gesamtgewicht aus A. und B., eines Tetrafluorethylenpolymerisats mit mittleren Teilchengrößen von 0,05 bis 20 $\mu$m und einer Dichte von 1,2 bis 1,9 g/cm$^3$, wobei die Komponente D in Form einer koagulierten Mischung von Emulsionen der Tetrafluorethylenpolymerisate D mit Emulsionen von max. 4 Gew.-Teilen, mindestens jedoch 0,1 Gew,-Teilen, bezogen auf 100 Gew.-Teile der Summe der Komponenten A. + B., an halogenfreien Pfropfpolymerisaten E. aus
E.1 5 bis 90 Gew.-Teilen einer Mischung aus:
- E1.1 50 bis 95 Gew.-% Styrol, $\alpha$-Methylstyrol, kernsubstituiertem Styrol, oder Mischungen daraus und
- E1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile eines Kautschuks mit einer Glastemperatur $T_G \leqq 10^\circ$ C,

eingesetzt wird, und wobei das Gewichtsverhältnis Pfropfpolymerisat E. zum Tetrafluorethylenpolymerisat D. zwischen 95:5 und 60:40 liegt.

**2.** Formmassen gemäß Anspruch 1, dadurch gekennzeichnet, daß die Komponente A eine mischung von halogenfreien Polydiorganosiloxan-Polycarbonat-Blockcopolymeren mit anderen, polysiloxanfreien thermoplastichen, halogenfreien Polycarbonaten ist, wobei der Gesamtgehalt an Diorganosiloxy-Einheiten in dieser Polycarbonat-Mischung wiederum zwischen 1 Gew.-% und 25 Gew.-% liegt.

**3.** Formmassen gemäß Ansprüchen 1 und 2, dadurch gekennzeichnet, daß die Komponente B. aus 90-75 Gew.-% Styrol, $\alpha$-Methylstyrol oder kernsubstituiertem Styrol oder Mischungen dieser Vinylaromaten mit 10-25 Gew.-% Maleinsäureanhydrid aufgebaut ist.

**4.** Formmassen gemäß Ansprüchen 1 bis 3, dadurch gekennzeichnet, daß die Komponente C in Mengen von 2 bis 15 Gew.-Teilen, bezogen auf 100 Gew.-Teile aus A. und B. eingesetzt wird.

**5.** Formmassen gemäß Ansprüchen 1 bis 4, dadurch gekennzeichnet, daß die Komponente D. in Mengen von 0,1 bis 1,0 Gew.-Teilen, bezogen auf 100 Gew.-Teile aus A. und B. eingesetzt wird.

**6.** Formmassen gemäß Ansprüchen 1 bis 5, dadurch gekennzeichnet, daß die Komponente E, aus 30 bis 80 Gew.-Teilen E.1 und 70 bis 20 Gew.-Teilen E.2 zusammengesetzt ist.

7. Formmassen gemäß Ansprüchen 1 bis 6, dadurch gekennzeichnet, daß sie mindestens einen Zusatzstoff, ausgewählt aus der Gruppe der Stabilisatoren, Pigmente, Fließmittel, Entformungsmittel und Antistatika enthalten.

8. Verfahren zur Herstellung der Formmassen gemäß Ansprüchen 1 bis 6, dadurch gekennzeichnet, daß man die Komponenten A bis E in bekannter Weise vermischt und danach bei Temperaturen von 200° C bis 330° C in gebräuchlichen Aggregaten schmelzcompoundiert oder schmelzextrudiert.

9. Verfahren zur Herstellung der Formmassen gemäß Ansprüchen 1 bis 6, dadurch gekennzeichnet, daß man Lösungen der Komponenten A bis E in geeigneten organischen Lösungsmitteln mischt und danach die Lösungsgemische in gebräuchlichen Eindampfaggregaten eindampft.

10. Verfahren zur Herstellung der Formmassen des Anspruchs 7 gemäß den Ansprüchen 8 und 9, dadurch gekennzeichnet, daß man mindestens einen Zusatz, ausgewählt aus der Gruppe der Stabilisatoren, Pigmente, Fließmittel, Flammschutzmittel, Entformungsmittel und Antistatika, einbezieht.

## Claims

1. Thermoplastic moulding compounds consisting of

A. 50 to 90 parts by weight of a halogen-free polydiorganosiloxane/polycarbonate block copolymer having an average molecular weight $\overline{M}_w$ of 10,000 to 200,000, a content of aromatic carbonate structural units between 75% by weight and 99% by weight and a content of diorganosiloxy units between 25% by weight and 1% by weight, the block copolymers being produced with a degree of polymerization $\overline{P}_n$ of 5 to 100 from $\alpha,\omega$-bishydroxyaryloxy-terminated polydiorganosiloxanes,

B. 10 to 50 parts by weight of a halogen-free statistical copolymer of 95 to 70% by weight styrene, $\alpha$-methyl styrene or nucleus-substituted styrenes of mixtures of the above-mentioned aromatic vinyl compounds with 5 to 30% by weight maleic anhydride,

C. 1 to 20 parts by weight, based on 100 parts by weight total weight of A. and B., of a halogen-free phosphorus compound corresponding to formula (I)

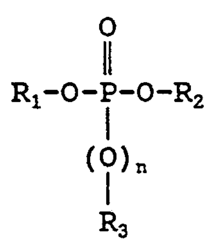

(I)

in which

$R_1$, $R_2$ and $R_3$ independently of one another represent $C_{1-8}$ alkyl or optionally alkyl-substituted $C_{6-20}$ aryl and n = 0 or 1 and

D. 0.05 to 2.0 parts by weight, again based on 100 parts by weight total weight of A and B., of a tetrafluoroethylene polymer having average particle sizes of 0.05 to 20 µm and a density of 1.2 to 1.9 g/cm³, component D being used in the form of a coagulated mixture of emulsions of the tetrafluoroethylene polymers D with emulsions of max. 4 parts by weight, but at least 0.1 part by weight, based on 100 parts by weight of the sum of components A. + B., of halogen-free graft polymers E. of

E.1 5 to 90 parts by weight of a mixture of:

- E1.1 50 to 95% by weight styrene, $\alpha$-methyl styrene, nucleus-substituted styrene or mixtures thereof and
- E1.2 50 to 5% by weight (meth)acrylonitrile, methyl methacrylate, maleic anhydride, N-substituted maleic imide or mixtures thereof on

E.2 95 to 10 parts by weight of a rubber having a glass temperature $T_G$ of ≦10° C,

and the ratio by weight of graft polymer E. to the tetrafluoroethylene polymer D. being between 95:5 and 60:40.

2. Moulding compounds as claimed in claim 1, characterized in that component A is a mixture of halogen-free polydiorganosiloxane/polycarbonate block copolymers with other, polysiloxane-free, thermoplastic halogen-free polycarbonates, the total content of diorganosiloxy units in this polycarbonate mixture again being between 1% by weight and 25% by weight.

**3.** Moulding compounds as claimed in claims 1 and 2, characterized in that component B. consists of 90 to 75% by weight styrene, α-methyl styrene or nucleus-substituted styrene or mixtures of these aromatic vinyl compounds with 10 to 25% by weight maleic anhydride.

**4.** Moulding compounds as claimed in claims 1 to 3, characterized in that component C is used in quantities of 2 to 15 parts by weight, based on 100 parts by weight of A. and B.

**5.** Moulding compounds as claimed in claims 1 to 4, characterized in that component D. is used in quantities of 0.1 to 1.0 parts by weight, based on 100 parts by weight of A. and B.

**6.** Moulding compounds as claimed in claims 1 to 5, characterized in that component E. consists of 30 to 80 parts by weight E.1 and 70 to 20 parts by weight E.2.

**7.** Moulding compounds as claimed in claims 1 to 6, characterized in that they contain at least one additive selected from the group consisting of stabilizers, pigments, flow aids, mould release agents and antistatic agents.

**8.** A process for the production of the moulding compounds claimed in claims 1 to 6, characterized in that components A to E are mixed in known manner and the resulting mixture is subsequently melt-compounded or melt-extruded in standard units at temperatures of 200 to 330 °C.

**9.** A process for the production of the moulding compounds claimed in claims 1 to 6, characterized in that solutions of components A to E in organic solvents are mixed and the solution mixtures are subsequently concentrated by evaporation in standard evaporation units.

**10.** A process as claimed in claims 8 and 9 for the production of the moulding compounds claimed in claims 8 and 9, characterized in that at least one additive selected from the group consisting of stabilizers, pigments, flow aids, flameproofing agents, mould release agents and antistatic agents are incorporated.

## Revendications

**1.** Compositions thermoplastiques à mouler, constituées de

A. 50 à 90 parties en poids d'un copolymère séquence polydiorganosiloxane-polycarbonate non halogéne, ayant une moyenne $M_p$ du poids moléculaire de 10 000 à 200 000 et une teneur en motifs structuraux carbonate aromatiques comprise entre 75 % en poids et 99 % en poids et une teneur en motifs diorganosiloxy comprise entre 25 % en poids et 1 % en poids, les copolymères séquencés étant préparés à partir de polydiorganosiloxanes porteurs de groupes α,ω-bishydroxyaryloxy terminaux, avec un degré de polymérisation $\overline{P}_n$ de 5 à 100,

B. 10 à 50 parties en poids d'un copolymérisat non halogéné à structure statistique de 95 à 70 % en poids de styrène, d'α-méthylstyrène ou de styrènes substitués sur le noyau ou de mélanges des composés aromatiques vinyliques mentionnés avec 5 à 30 % en poids d'anhydride d'acide maléique,

C. 1 à 20 parties en poids, pour 100 parties en poids du total de A. et B., d'un composé phosphoré non halogéné de formule (I)

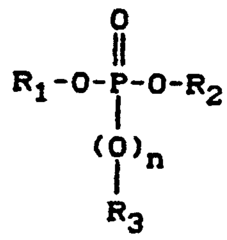 (I)

dans laquelle

$R_1$, $R_2$ et $R_3$ représentent indépendamment les uns des autres un groupe alkyle en $C_1$ à $C_8$ ou un groupe aryle en $C_6$ à $C_{20}$ portant éventuellement un substituant alkyle et n a la valeur 0 ou 1, et

D. 0,05 à 2,0 parties en poids, là encore pour 100 parties en poids du total de A. et B., d'un polymérisat de tétrafluoréthylène ayant des diamètres moyens de particules de 0,05 à 20 µm et une masse volumique de 1,2 à 1,9 g/cm³, le composant D étant sous la forme d'un mélange coagulé d'émulsions des polymérisats D de tétrafluoréthylène avec des émulsions contenant au maximum 4 parties en poids, mais au moins 0,1 partie en poids, pour 100 parties en poids de la somme des composants A. + B., de polymérisats greffés non halogénés E. constitués de

E.1 5 à 90 parties en poids d'un mélange de :

- E1.1 50 à 95 % en poids de styrène, d'α-méthylstyrène, de styrène substitué sur le noyau ou de leurs mélanges et
- E1.2 50 à 5 % en poids de (méth)acrylonitrile, de méthacrylate de méthyle, d'anhydride d'acide maléique, de maléinimide substitué sur l'atome d'azote ou de leurs mélanges, sur

E.2 95 à 10 parties en poids d'un caoutchouc de température $T_G$ de transition vitreuse inférieure ou égale à 10° C,

et le rapport en poids du polymérisat greffé E. au polymérisat de tétrafluoréthylène D. se situant entre 95:5 et 60:40.

**2.** Compositions à mouler suivant la revendication 1, caractérisées en ce que le composant A. est un mélange de copolymères séquencés polydiorganosiloxanepolycarbonate non halogénés avec d'autres polycarbonates non halogénés thermoplastiques dépourvus de polysiloxane, la teneur totale en motifs diorganosiloxy de ce mélange de polycarbonates se situant là encore entre 1 % en poids et 25 % en poids.

**3.** Compositions à mouler suivant les revendications 1 et 2, caractérisées en ce que le composant B. est constitué de 90 à 75 % en poids de styrène, d'α-méthylstyrène ou de styrène substitué sur le noyau ou de mélanges de ces hydrocarbures aromatiques vinyliques avec 10 à 25 % en poids d'anhydride d'acide maléique.

**4.** Compositions à mouler suivant les revendications 1 à 3, caractérisées en ce que le composant C est utilisé en quantités de 2 à 15 parties en poids, pour 100 parties en poids de A. et B.

**5.** Compositions à mouler suivant les revendications 1 à 4, caractérisées en ce que le composant D. est utilisé en quantités de 0,1 à 1,0 partie en poids pour 100 parties en poids de A. et B.

**6.** Compositions à mouler suivant les revendications 1 à 5, caractérisées en ce que le composant E. est constitué de 30 à 80 parties en poids de E.1 et de 70 à 20 parties en poids de E.2.

**7.** Compositions à mouler suivant les revendications 1 à 6, caractérisées en ce qu'elles contiennent au moins un additif choisi dans le groupe des agents stabilisants, des pigments, des agents d'écoulement, des agents de démoulage et des agents antistatiques.

**8.** Procédé de production de compositions à mouler suivant les revendications 1 à 6, caractérisé en ce qu'on mélange les composants A à E d'une manière connue, puis on formule ou on extrude le mélange à l'état fondu à des températures de 200 à 330° C dans des appareils classiques.

9. Procédé de production de compositions à mouler suivant les revendications 1 à 6, caractérisé en ce qu'on mélange des solutions des composants A à E dans des solvants organiques appropriés, puis on concentre le mélange en solution par évaporation dans des appareils classiques appropriés.

10. Procédé de production de compositions à mouler de la revendication 7 suivant les revendications 8 et 9, caractérisé en ce qu'on incorpore au moins un additif choisi dans le groupe des agents stabilisants, des pigments, des agents d'écoulement, des agents retardateurs de flamme, des agents de démoulage et des agents antistatiques.